(19) Europäisches Patentamt
European Patent Office
Office européen des brevets

(11) **EP 4 514 003 A1**

(12) **EUROPEAN PATENT APPLICATION**
published in accordance with Art. 153(4) EPC

(43) Date of publication:
**26.02.2025 Bulletin 2025/09**

(21) Application number: **23791137.5**

(22) Date of filing: **14.04.2023**

(51) International Patent Classification (IPC):
***H04W 72/04*** (2023.01)

(52) Cooperative Patent Classification (CPC):
**H04W 4/70; H04W 72/04; H04W 72/0446;
H04W 72/21; H04W 72/23; H04W 72/53**

(86) International application number:
**PCT/CN2023/088372**

(87) International publication number:
**WO 2023/202482 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2022 CN 202210413095**

(71) Applicant: **Sharp Kabushiki Kaisha
Sakai City, Osaka 590-8522 (JP)**

(72) Inventors:
• **LUO, Chao
  Pudong, Shanghai 201206 (CN)**
• **LIU, Renmao
  Pudong, Shanghai 201206 (CN)**
• **ZHAO, Yinan
  Pudong, Shanghai 201206 (CN)**

(74) Representative: **Müller Hoffmann & Partner
Patentanwälte mbB
St.-Martin-Straße 58
81541 München (DE)**

(54) **METHOD EXECUTED BY USER EQUIPMENT, AND USER EQUIPMENT**

(57) The present invention provides a method performed by user equipment, and user equipment. The method includes: requesting or triggering, by a higher layer, the user equipment to determine a resource subset for a PSSCH/PSCCH transmission, wherein the higher layer selects a sidelink resource for the PSSCH/PSCCH transmission from the resource subset; and determining, by the user equipment, a set of candidate slots.

S201

A higher layer requests
determination of a resource subset
for PSSCH/PSCCH transmission

S202

Determine a set of candidate slots

FIG. 4

**EP 4 514 003 A1**

## Description

TECHNICAL FIELD

The present invention relates to the technical field of wireless communications, and in particular to a method performed by user equipment, and corresponding user equipment.

BACKGROUND

In conventional cellular networks, all communication needs to pass through base stations. By contrast, D2D communication (device-to-device communication) refers to a means of communication in which two user equipment units directly communicate with each other without needing to pass through a base station or needing a core network to perform forwarding therebetween. A research project on the use of LTE equipment to implement proximity D2D communication services was approved at the 3rd Generation Partnership Project (3GPP) RAN#63 plenary meeting in March 2014 (see Non-Patent Document 1). The functions introduced in the LTE Release 12 D2D include:

1) a discovery function between proximate devices in an LTE network coverage scenario;
2) a direct broadcast communication function between proximate devices; and
3) support for unicast and groupcast communication functions at higher layers.

A research project on enhanced LTE eD2D (enhanced D2D) was approved at the 3GPP RAN#66 plenary meeting in December 2014 (see Non-Patent Document 2). The main functions introduced in the LTE Release 13 eD2D include:

1) D2D discovery in out-of-coverage and partial-coverage scenarios; and
2) a priority handling mechanism for D2D communication.

Based on the design of the D2D communication mechanism, a V2X feasibility research project based on D2D communication was approved at the 3GPP RAN#68 plenary meeting in June 2015. V2X stands for Vehicle to Everything, and is used to implement information exchange between a vehicle and all entities that may affect the vehicle, for the purpose of reducing accidents, alleviating traffic congestion, reducing environmental pollution, and providing other information services. Application scenarios of V2X mainly include four aspects:

1) V2V, Vehicle to Vehicle, i.e., vehicle-to-vehicle communication;
2) V2P, Vehicle to Pedestrian, i.e., a vehicle transmits alarms to a pedestrian or a non-motorized vehicle;
3) V2N: Vehicle-to-Network, i.e., a vehicle connects to a mobile network;
4) V2I: Vehicle-to-Infrastructure, i.e., communication between a vehicle and road infrastructure, etc.

3GPP divides the research and standardization of V2X into three stages. The first stage was completed in September 2016, and mainly focused on V2V and was based on LTE Release 12 and Release 13 D2D (also known as sidelink), that is, the development of proximity communication technologies (see Non-Patent Document 3). V2X stage 1 introduces a new D2D communication interface referred to as a PC5 interface. The PC5 interface is mainly used to address the issue of cellular Internet of Vehicle (IoV) communication in high-speed (up to 250 km/h) and high-node density environments. Vehicles can exchange information such as position, speed, and direction through the PC5 interface, that is, the vehicles can communicate directly through the PC5 interface. Compared with the proximity communication between D2D devices, the functions introduced in LTE Release 14 V2X mainly include:

1) higher density DMRS to support high-speed scenarios;
2) introduction of sub-channels to enhance resource allocation methods; and
3) introduction of a user equipment sensing mechanism having semi-persistent scheduling.

The second stage of the V2X research project belongs to the LTE Release 15 research category (see Non-Patent Document 4). The main features introduced include high-order 64QAM modulation, V2X carrier aggregation, short TTI transmission, as well as feasibility study of transmit diversity.

The corresponding third stage, a V2X feasibility research project based on 5G NR network technologies (see Non-Patent Document 5), was approved at the 3GPP RAN#80 plenary meeting in June 2018.

The 5G NR V2X project supports user equipment sensing-based resource allocation mode 2, or referred to as transmission mode 2. In resource allocation mode 2, the physical layer of the user equipment senses transmission resources in a resource pool, and reports a set of available transmission resources to the upper layers. After acquiring the report from the physical layer, the upper layers select a resource for sidelink transmission.

A standardization study project based on standardized NR sidelink enhancement (see Non-Patent Document 6) was approved at the 3GPP RAN#90e plenary meeting in December 2020. The sidelink enhancement includes the following two aspects:

1) Resource allocation modes for power consumption reduction (power saving) of sidelink user equipment are standardized, including but are not limited to: resource allocation modes based on partial sensing, and resource allocation modes based on random resource selection.

2) Research is conducted to improve the communication reliability of resource allocation mode 2 in NR sidelink and reduce communication latency of resource allocation mode 2.

In the user equipment sensing-based resource allocation mode 2 described above, the physical layer of the user equipment senses transmission resources in a resource pool, which means that the user equipment, according to indication information in received SCI transmitted by other user equipment, excludes a resource that is in a set of candidate resources and that overlaps with a resource indicated by the indication information, and resources that are not excluded from the set of candidate resources are reported to a higher layer.

The solution of the present patent mainly includes a method for sidelink user equipment to determine a candidate slot corresponding to a periodic monitoring slot in a partial sensing-based resource allocation mode.

Prior Art Document

Non-Patent Documents

Non-Patent Document 1: RP-140518, Work item proposal on LTE Device to Device Proximity Services
Non-Patent Document 2: RP-142311, Work Item Proposal for Enhanced LTE Device to Device Proximity Services
Non-Patent Document 3: RP-152293, New WI proposal: Support for V2V services based on LTE sidelink
Non-Patent Document 4: RP-170798, New WID on 3GPP V2X Phase 2
Non-Patent Document 5: RP-181480, New SID Proposal: Study on NR V2X
Non-Patent Document 6: RP-202846, WID revision: NR sidelink enhancement

SUMMARY

In order to address at least part of the aforementioned issues, the present invention provides a method performed by user equipment, and user equipment.

A method performed by user equipment according to a first aspect of the present invention comprises: requesting or triggering, by a higher layer, the user equipment to determine a resource subset for a PSSCH/PSCCH transmission, wherein the higher layer selects a sidelink resource for the PSSCH/PSCCH transmission from the resource subset; and determining, by the user equipment, a set of candidate slots.

In the method according to the first aspect of the present invention, the higher layer provides a resource reservation interval, and/or the means by which the user equipment determines the set of candidate slots is up to user equipment implementation.

The method according to the first aspect of the present invention further comprises: determining, by the user equipment, a set of monitoring slots.

In the method according to the first aspect of the present invention, when the higher layer provides the resource reservation interval, the resource reservation interval is equal to 0.

In the method according to the first aspect of the present invention, when the resource reservation interval is equal to 0 and when the user equipment performs contiguous partial sensing (CPS), the user equipment selects Y' candidate slots, wherein $Y' \geq Y_{min}'$, and $Y_{min}'$ represents the configured minimum number of candidate slots corresponding the CPS or aperiodic transmission.

In the method according to the first aspect of the present invention, if $Y' < Y_{min}'$, the user equipment can include other candidate slots up to user equipment implementation, so as to ensure that the number of candidate slots is not less than $Y_{min}'$.

In the method according to the first aspect of the present invention, when the user equipment performs periodic-based partial sensing (PBPS), the set of monitoring slots of the user equipment is $t_{y-k \times P_{reserve}}^{SL}$ or $t_{y-k \times P_{reserve}'}^{'SL}$,

wherein $t_y^{SL}$ and $t_y'^{SL}$ each represent any slot in the set of candidate slots excluding the included other candidate slots, or represent any one of the selected Y' candidate slots, and $P'_{reserve} = \left\lceil \frac{T'_{max}}{10240ms} \times P_{reserve} \right\rceil$, wherein $T'_{max}$ represents the number of slots belonging to the resource pool within 10240 ms (SFN/DFN 0 to 1023); for $P_{reserve}$, when a monitoring period list is configured in the resource pool, $P_{reserve}$ corresponds to a period or a non-zero period in the monitoring period list; otherwise, $P_{reserve}$ corresponds to all periods or all non-zero periods in a resource reservation period list configured in the resource pool; for $k$, if no additional periodic monitoring slot is configured or pre-configured, then

$t_{y-k \times P_{reserve}}^{SL}$ represents the most recent periodic monitoring slot before a time $t_{y_0}^{SL} - (T_{proc,0}^{SL} + T_{proc,1}^{SL})$ for a corresponding given $P_{reserve}$; otherwise, $t_{y-k \times P_{reserve}}^{SL}$ represents the most recent periodic monitoring slot before the time $t_{y_0}^{SL} - (T_{proc,0}^{SL} + T_{proc,1}^{SL})$ for a corresponding given $P_{reserve}$, as well as the last periodic monitoring slot prior to the most recent periodic monitoring slot for the given $P_{reserve}$, and $t_{y-k \times P'_{reserve}}'^{SL}$ represents the most recent periodic monitoring slot before a time $t_{y_0}'^{SL} - (T_{proc,0}^{SL} + T_{proc,1}^{SL})$ for a corresponding given $P_{reserve}$; otherwise, $t_{y-k \times P'_{reserve}}'^{SL}$ represents the most recent periodic monitoring slot before the time $t_{y_0}'^{SL} - (T_{proc,0}^{SL} + T_{proc,1}^{SL})$ for a corresponding given $P_{reserve}$, as well as the last periodic monitoring slot prior to the most recent periodic monitoring slot for the given $P_{reserve}$, where $t_{y_0}^{SL}$ and $t_{y_0}'^{SL}$ each represent the first slot in the set of candidate slots in a time domain, $T_{proc,1}^{SL}$ represents a first processing latency, and $T_{proc,0}^{SL}$ represents a second processing latency.

In the method according to the first aspect of the present invention, a resource allocation mode of the user equipment is resource allocation based on partial sensing, and/or the higher layer configures or instructs the user equipment to perform partial sensing.

In the method according to the first aspect of the present invention, if the resource reservation interval is not equal to 0 and/or if the user equipment performs periodic-based partial sensing (PBPS), then the user equipment selects Y candidate slots within a time interval [n + T1, n + T2] used as a resource selection window, wherein Y ≥ $Y_{min}$, and $Y_{min}$ represents the configured minimum number of candidate slots corresponding to the PBPS or periodic transmission; or, if the resource reservation interval is equal to 0 and/or if the user equipment performs contiguous partial sensing (CPS), then the user equipment selects Y' candidate slots within a time interval [n + T1, n + T2] used as a resource selection window, wherein Y' ≥ $Y_{min}$', and $Y_{min}$' represents the configured minimum number of candidate slots corresponding to the CPS aperiodic transmission.

User equipment according to a second aspect of the present invention comprises: a processor; and a memory having instructions stored therein, wherein the instructions, when run by the processor, perform the method according to the first aspect.

Beneficial Effects of Present Invention

According to the solution of the present patent, in NR sidelink enhancement, for the resource allocation mode based on partial sensing, when user equipment determines a monitoring slot according to candidate slots, candidate slots that do not correspond to any periodic monitoring slot are excluded therefrom (i.e., the user equipment will not determine a monitoring slot according to these candidate slots), thereby ensuring that the user equipment does not need to monitor these periodic monitoring slots, and effectively reducing power consumption of the user equipment.

BRIEF DESCRIPTION OF THE DRAWINGS

The above and other features of the present invention will become more apparent from the following detailed description in combination with the accompanying drawings, in which:

FIG. 1 is a schematic diagram showing LTE V2X UE sidelink communication.
FIG. 2 is a schematic diagram showing LTE V2X resource allocation modes.
FIG. 3 is a schematic diagram showing the basic procedure of a method performed by user equipment according to Embodiments 1 and 2 of the invention.
FIG. 4 is a schematic diagram showing the basic procedure of a method performed by user equipment according to Embodiment 3 of the invention.
FIG. 5 is a block diagram showing user equipment according to an embodiment of the present invention.

DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

In the following description, a 5G mobile communication system and later evolved versions thereof are used as exemplary application environments to set forth a plurality of embodiments according to the present invention in detail. However, it is to be noted that the present invention is not limited to the following embodiments, but is applicable to many other wireless communication systems, such as communication systems after 5G and 4G mobile communication systems before 5G.

Some terms involved in the present invention are described below. Unless otherwise specified, the terms used in the present invention use the definitions herein. The terms given in the present invention may vary in LTE, LTE-Advanced, LTE-Advanced Pro, NR, and subsequent communication systems, but unified terms are used in the present invention. When applied to a specific system, the terms can be replaced with terms used in the corresponding system.

3GPP: 3rd Generation Partnership Project
LTE: Long Term Evolution
NR: New Radio
PDCCH: Physical Downlink Control Channel
DCI: Downlink Control Information
PDSCH: Physical Downlink Shared Channel
UE: User Equipment
eNB: evolved NodeB, evolved base station
gNB: NR base station
TTI: Transmission Time Interval
OFDM: Orthogonal Frequency Division Multiplexing
CP-OFDM: Cyclic Prefix Orthogonal Frequency Division Multiplexing
C-RNTI: Cell Radio Network Temporary Identifier
CSI: Channel State Information
HARQ: Hybrid Automatic Repeat Request
CSI-RS: Channel State Information Reference Signal
CRS: Cell Reference Signal
PUCCH: Physical Uplink Control Channel
PUSCH: Physical Uplink Shared Channel
UL-SCH: Uplink Shared Channel
CG: Configured Grant
Sidelink: sidelink
SCI: Sidelink Control Information
PSCCH: Physical Sidelink Control Channel
MCS: Modulation and Coding Scheme
RB: Resource Block
RE: Resource Element
CRB: Common Resource Block
CP: Cyclic Prefix
PRB: Physical Resource Block
PSSCH: Physical Sidelink Shared Channel
FDM: Frequency Division Multiplexing
RRC: Radio Resource Control
RSRP: Reference Signal Receiving Power
SRS: Sounding Reference Signal
DMRS: Demodulation Reference Signal
CRC: Cyclic Redundancy Check
PSDCH: Physical Sidelink Discovery Channel
PSBCH: Physical Sidelink Broadcast Channel

SFI: Slot Format Indication
TDD: Time Division Duplexing
FDD: Frequency Division Duplexing
SIB 1: System Information Block Type 1
SLSS: Sidelink Synchronization Signal
PSSS: Primary Sidelink Synchronization Signal
SSSS: Secondary Sidelink Synchronization Signal
PCI: Physical Cell ID
PSS: Primary Synchronization Signal
SSS: Secondary Synchronization Signal
BWP: Bandwidth Part
GNSS: Global Navigation Satellite System
SFN: System Frame Number (radio frame number)
DFN: Direct Frame Number
IE: Information Element
SSB: Synchronization Signal Block
EN-DC: EUTRA-NR Dual Connection, LTE-NR Dual Connectivity
MCG: Master Cell Group
SCG: Secondary Cell Group
PCell: Primary Cell
SCell: Secondary Cell
PSFCH: Physical Sidelink Feedback Channel
SPS: Semi-Persistent Scheduling
TA: Timing Advance
PT-RS: Phase-Tracking Reference Signals
TB: Transport Block
CB: Code Block
QPSK: Quadrature Phase Shift Keying
16/64/256 QAM: 16/64/256 Quadrature Amplitude Modulation
AGC: Automatic Gain Control
TDRA (field): Time Domain Resource Assignment indication (field)
FDRA (field): Frequency Domain Resource Assignment indication (field)
ARFCN: Absolute Radio Frequency Channel Number
SC-FDMA: Single Carrier-Frequency Division Multiple Access
MAC: Medium Access Control
DRX: Discontinuous Reception

The following is a description of the prior art associated with the solution of the present invention. Unless otherwise specified, the same terms in the specific embodiments have the same meanings as in the prior art.

It is worth pointing out that the V2X and sidelink mentioned in the description of the present invention have the same meaning. The V2X herein can also mean sidelink; similarly, the sidelink herein can also mean V2X, and no specific distinction and limitation will be made in the following text.

The resource allocation mode of V2X (sidelink) communication and the transmission mode of V2X (sidelink) communication in the description of the present invention can equivalently replace each other. The resource allocation mode involved in the description can mean a transmission mode, and the transmission mode involved herein can mean a resource allocation mode. In NR sidelink, transmission mode 1 represents a base station scheduling-based transmission mode (resource allocation mode), and transmission mode 2 represents a user equipment sensing-based and resource selection-based transmission mode (resource allocation mode).

The PSCCH in the description of the present invention is used to carry SCI. The PSSCHs associated with or relevant to or corresponding to or scheduled by PSCCHs involved in the description of the present invention all have the same meaning, and all refer to an associated or corresponding PSSCH. Similarly, the SCI (including first stage SCI and second stage SCI) associated with or relevant to or corresponding to PSSCH involved in the description has the same meaning, and all refer to associated SCI or corresponding SCI. It is worth pointing out that the first stage SCI, referred to as 1st stage SCI or SCI format 1-A, is transmitted in the PSCCH, and the second stage SCI, referred to as 2nd stage SCI or SCI format 2-A (or, SCI format 2-B), is transmitted on resources of the corresponding PSSCH.

Numerologies in NR (including NR sidelink) and slots in NR (including NR sidelink)

A numerology includes two aspects: a subcarrier spacing and a cyclic prefix (CP) length. NR supports five subcarrier spacings, which are respectively 15 kHz, 30 kHz, 60 kHz, 120 kHz and 240 kHz (corresponding to $\mu$ = 0, 1, 2, 3, 4). Table 4.2-1 shows the supported transmission numerologies specifically as follows:

Table 4.2-1 Subcarrier Spacings Supported by NR

| $\mu$ | $\Delta f = 2^{\mu} \cdot 15$[kHz] | CP (cyclic prefix) |
|---|---|---|
| 0 | 15 | Normal |
| 1 | 30 | Normal |
| 2 | 60 | Normal, Extended |
| 3 | 120 | Normal |
| 4 | 240 | Normal |

Only when $\mu$ = 2, that is, in the case of a 60 kHz subcarrier spacing, is an extended CP supported, whereas only a normal CP is supported in the case of other subcarrier spacings. For the normal CP, each slot includes 14 OFDM symbols; for the extended CP, each slot includes 12 OFDM symbols. For $\mu$ = 0, namely, a 15 kHz subcarrier spacing, one slot = 1 ms; for $\mu$ = 1, namely, a 30 kHz subcarrier spacing, one slot = 0.5 ms; for $\mu$ = 2, namely, a 60 kHz subcarrier spacing, one slot = 0.25 ms, and so on.

NR and LTE have the same definition for a subframe, which denotes 1 ms. For a subcarrier spacing configuration $\mu$, a slot index in one subframe (1 ms) may be expressed as $n_s^{\mu}$, and ranges from 0 to $N_{slot}^{subframe,\mu} - 1$. A slot index in one system frame (having a duration of 10 ms) may be expressed as $n_{s,f}^{\mu}$, and ranges from 0 to $N_{slot}^{frame,\mu} - 1$. The definitions of $N_{slot}^{subframe,\mu}$ and $N_{slot}^{frame,\mu}$ in different cases of subcarrier spacings $\mu$ are shown in the tables below.

Table 4.3.2-1: the number of symbols included in each slot, the number of slots included in each system frame, and the number of slots included in each subframe for the normal CP

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 4.3.2-2: the number of symbols included in each slot, the number of slots included in each system frame, and the number of slots included in each subframe for the extended CP (60 kHz)

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

On an NR carrier, a system frame (or simply referred to as frame) number (SFN) ranges from 0 to 1023. The concept of a direct system frame number (DFN) is introduced to sidelink, and the number thereof likewise ranges from 0 to 1023. The above description of the relationship between the system frame and numerology can also be applied to a direct system frame. For example, the duration of one direct system frame is likewise equal to 10 ms; for a 15 kHz subcarrier spacing, one direct system frame includes 10 slots, and so on. The DFN is applied to timing on a sidelink carrier.

Parameter sets in LTE (including LTE V2X) and slots and subframes in LTE (including LTE V2X)

The LTE only supports a 15 kHz subcarrier spacing. Both the extended CP and the normal CP are supported in the LTE. The subframe has a duration of 1 ms and includes two slots. Each slot has a duration of 0.5 ms.

For a normal CP, each subframe includes 14 OFDM symbols, and each slot in the subframe includes 7 OFDM symbols; for an extended CP, each subframe includes 12 OFDM symbols, and each slot in the subframe includes 6 OFDM symbols.

Resource block (RB) and resource element (RE)

The resource block (RB) is defined in the frequency domain as $N_{sc}^{RB} = 12$ consecutive subcarriers. For example, for a 15 kHz subcarrier spacing, the RB is 180 kHz in the frequency domain. For a 15 kHz $\times 2^{\mu}$ subcarrier spacing, the resource element (RE) represents one subcarrier in the frequency domain and one OFDM symbol in the time domain.

Sidelink communication scenario

1) Out-of-coverage sidelink communication: both of two UEs performing sidelink communication are out of network coverage (for example, the UE cannot detect any cell that meets the "cell selection criterion" on a frequency at which sidelink communication needs to be performed, and that means the UE is out of network coverage).
2) In-coverage sidelink communication: both of two UEs performing sidelink communication are in network coverage (for example, the UE detects at least one cell that meets the "cell selection criterion" on a frequency at which sidelink communication needs to be performed, and that means the UE is in network coverage).
3) Partial-coverage sidelink communication: one of two UEs performing sidelink communication is out of network coverage, and the other is in network coverage.

From the perspective of the UE side, the UE only has two scenarios, out-of-coverage and in-coverage. Partial-coverage is described from the perspective of sidelink communication.

Basic procedure of LTE V2X (sidelink) communication

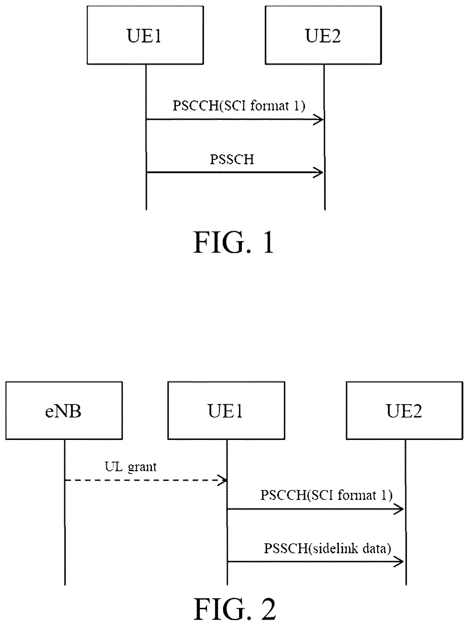

FIG. 1 is a schematic diagram showing LTE V2X UE sidelink communication. First, UE1 transmits to UE2 sidelink control information (SCI format 1), which is carried by a physical layer channel PSCCH. SCI format 1 includes scheduling information of a PSSCH, such as frequency domain resources and the like of the PSSCH. Secondly, UE1 transmits to UE2 sidelink data, which is carried by the physical layer channel PSSCH. The PSCCH and the corresponding PSSCH are frequency division multiplexed, that is, the PSCCH and the corresponding PSSCH are located in the same subframe in the time domain but are located on different RBs in the frequency domain. In LTE V2X, one transport block (TB) may include only one initial transmission, or include one initial transmission and one blind retransmission (indicating a retransmission not based on HARQ feedback).

Specific design methods of the PSCCH and the PSSCH are as follows:

1) The PSCCH occupies one subframe in the time domain and two consecutive RBs in the frequency domain. Initialization of a scrambling sequence uses a predefined value of 510. The PSCCH may carry SCI format 1, wherein SCI format 1 at least includes frequency domain resource information of the PSSCH. For example, for a frequency domain resource indication field, SCI format 1 indicates a starting sub-channel number and the number of consecutive sub-channels of the PSSCH corresponding to the PSCCH.
2) The PSSCH occupies one subframe in the time domain, and the PSSCH and the corresponding PSCCH are frequency division multiplexed (FDM). The PSSCH occupies one or more consecutive sub-channels in the frequency domain. The sub-channel represents $n_{subCHsize}$ consecutive RBs in the frequency domain, $n_{subCHsize}$ is configured by an RRC parameter, and a starting sub-channel and the number of consecutive sub-channels are indicated by the frequency domain resource indication field of SCI format 1.

LTE V2X resource allocation modes: transmission mode 3/transmission mode 4

FIG. 2 shows two LTE V2X resource allocation modes, which are referred to as base station scheduling-based resource allocation (transmission mode 3) and UE sensing-based resource allocation (transmission mode 4), respectively. In NR sidelink, transmission mode 3 in LTE V2X corresponds to transmission mode 1 in NR V2X, and is a base station scheduling-based transmission mode, whereas transmission mode 4 in LTE V2X corresponds to transmission mode 2 in NR V2X, and is a UE sensing-based transmission mode. In LTE V2X, when there is eNB network coverage, a base station can configure, through UE-level dedicated RRC signaling *SL-V2X-ConfigDedicated,* a resource allocation mode for the UE, which may also be referred to as a transmission mode for the UE, and is specifically as follows:

> 1) Base station scheduling-based resource allocation mode (transmission mode 3):
> the base station scheduling-based resource allocation mode means that frequency domain resources used in sidelink communication are scheduled by the base station. Transmission mode 3 includes two scheduling modes, which are dynamic scheduling and semi-persistent scheduling (SPS), respectively. For the dynamic scheduling, a UL grant (DCI format 5A) includes the frequency domain resources of the PSSCH, and a CRC of a PDCCH or an EPDCCH carrying the DCI format 5A is scrambled by an SL-V-RNTI. For the semi-persistent scheduling (SPS), the base station configures one or more (at most 8) configured grants through *IE: SPS-ConfigSL-r14,* and each configured grant includes a grant index and a resource period of the grant. The UL grant (DCI format 5A) includes the frequency domain resource of the PSSCH, indication information (3 bits) of the grant index, and indication information of SPS activation or release (or deactivation). The CRC of the PDCCH or the EPDCCH carrying the DCI format 5A is scrambled by an SL-SPS-V-RNTI.

> Specifically, when RRC signaling *SL-V2X-ConfigDedicated is* set to *scheduled-r14*, it indicates that the UE is configured in a base station scheduling-based transmission mode. The base station configures the SL-V-RNTI or the SL-SPS-V-RNTI by means of RRC signaling, and transmits the UL grant to the UE by means of the PDCCH or the EPDCCH (DCI format 5A, in which the CRC is scrambled by the SL-V-RNTI or the SL-SPS-V-RNTI). The UL grant at least includes scheduling information of the PSSCH frequency domain resource in sidelink communication. When the UE successfully detects the PDCCH or the EPDCCH scrambled by the SL-V-RNTI or the SL-SPS-V-RNTI, the UE uses a PSSCH frequency domain resource indication field in the UL grant (DCI format 5A) as PSSCH frequency domain resource indication information in a PSCCH (SCI format 1), and transmits the PSCCH (SCI format 1) and a corresponding PSSCH.
> For SPS in transmission mode 3, the UE receives, on a downlink subframe n, the DCI format 5A scrambled by the SL-SPS-V-RNTI. If the DCI format 5A includes the indication information of SPS activation, then the UE determines frequency domain resources of the PSSCH according to the indication information in the DCI format 5A, and determines time domain resources of the PSSCH (transmission subframes of the PSSCH) according to information such as the subframe n and the like.

2) UE sensing-based resource allocation mode (transmission mode 4): the UE sensing-based resource allocation mode means that resources used in sidelink communication are based on a procedure of sensing, by the UE, a candidate available resource set. When the RRC signaling *SL-V2X-ConfigDedicated is* set to *ue-Selected-r14*, it indicates that the UE is configured to be in a UE sensing-based transmission mode. In the UE sensing-based transmission mode, the base station configures an available transmission resource pool, and the UE determines a PSSCH sidelink transmission resource in the transmission resource pool according to a certain rule (for a detailed description of the procedure, see the LTE V2X UE sensing procedure section), and transmits a PSCCH (SCI format 1) and a corresponding PSSCH.

Sidelink resource pool

In sidelink, resources transmitted and received by UEs all belong to resource pools. For example, for a base station scheduling-based transmission mode in sidelink, the base station schedules transmission resources for a sidelink UE in a resource pool; alternatively, for a UE sensing-based transmission mode in sidelink, the UE determines a transmission resource in a resource pool.

Resource allocation mode based on (partial) sensing

For a resource allocation mode based on (partial) sensing, sidelink user equipment selects a candidate resource within one time window, determines, according to a reserved resource indicated by a PSCCH transmitted by other user equipment in a monitoring slot, candidate resources overlapping with the reserved resource, and excludes the foregoing candidate resources overlapping with the reserved resource. The physical layer reports, to the MAC layer, a set of candidate resources that are not excluded, and the MAC layer selects transmission resources for the PSSCH/PSCCH. The set of transmission resources selected by the MAC layer is referred to as a selected sidelink grant.

The resource allocation mode based on sensing (full sensing) means that the set of slots monitored by the user equipment is consecutive slots in a monitoring window (sensing window).

The resource allocation mode based on partial sensing includes two parts, that is, periodic-based partial sensing (PBPS) and contiguous partial sensing. The PBPS means that a candidate slot corresponds to one or more periodic monitoring slots. The CPS means that continuous slot monitoring is performed within a particular monitoring window.

Resource selection window [n + T1, n + T2]

In a resource allocation mode based on sensing (or, partial sensing), a higher layer requests or triggers, in a slot n, the physical layer to determine a resource for a PSSCH/PSCCH transmission (to perform sensing or partial sensing). The resource selection window is defined as [n + T1, n + T2]. That is, user equipment selects a transmission resource within the foregoing window. T1 satisfies the condition $0 \leq T1 \leq T_{proc,1}^{SL}$ , and the selection of T1 is up to user equipment implementation. RRC configuration information includes a resource selection window configuration list *sl-SelectionWindowList,* where an element in the list and corresponding to a given priority *prio$_{TX}$* (the priority of transmitting the PSSCH) is represented by $T_{2min}$. If $T_{2min}$ is less than a remaining packet delay budget (remaining PDB for short), then T2 satisfies the condition $T_{2min} \leq T2 \leq$ remaining PDB, and the selection of T2 is up to user equipment implementation; otherwise, T2 is set to the remaining PDB. $T_{proc,1}^{SL}$ is defined as follows ($\mu_{SL}$ represents a sidelink subcarrier spacing parameter, that is, the subcarrier spacing is $2^{\mu_{SL}} \times$ 15kHz):

<table>
<tr><td colspan="2" align="center">Table 8.1.4-2: Values of $T_{proc,1}^{SL}$</td></tr>
<tr><td align="center">$\mu_{SL}$</td><td align="center">$T_{proc,1}^{SL}$ [slots]</td></tr>
<tr><td align="center">0</td><td align="center">3</td></tr>
<tr><td align="center">1</td><td align="center">5</td></tr>
<tr><td align="center">2</td><td align="center">9</td></tr>
<tr><td align="center">3</td><td align="center">17</td></tr>
</table>

<table>
<tr><td colspan="2" align="center">Table 8.1.4-1: Values of $T_{proc,0}^{SL}$</td></tr>
<tr><td align="center">$\mu_{SL}$</td><td align="center">$T_{proc,0}^{SL}$ [slots]</td></tr>
<tr><td align="center">0</td><td align="center">1</td></tr>
<tr><td align="center">1</td><td align="center">1</td></tr>
<tr><td align="center">2</td><td align="center">2</td></tr>
<tr><td align="center">3</td><td align="center">4</td></tr>
</table>

Hereinafter, specific examples and embodiments related to the present invention are described in detail. In addition, as described above, the examples and embodiments recited in the present disclosure are illustrative descriptions for facilitating understanding of the present invention, rather than limiting the present invention.

[Embodiment 1]

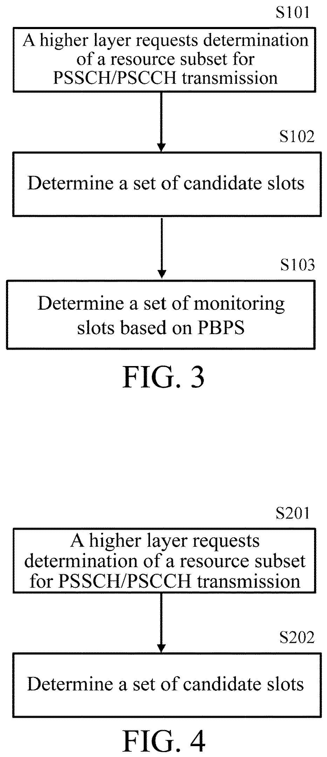

FIG. 3 is a schematic diagram showing the basic procedure of a method performed by user equipment according to Embodiment 1 of the present invention.

The method performed by user equipment according to Embodiment 1 of the present invention is described in detail below in conjunction with the basic procedure diagram shown in FIG. 3.

As shown in FIG. 3, in Embodiment 1 of the present invention, the steps performed by user equipment include the following:

Step S101, requesting (or triggering), by a higher layer (or an upper layer), sidelink user equipment (the physical layer) to determine a resource subset for a PSSCH/PSCCH transmission.

The higher layer selects a sidelink resource for the PSSCH/PSCCH transmission from the resource subset.

Optionally, the higher layer provides a resource reservation interval, and optionally, the resource reservation interval is equal to 0 milliseconds, or 0.

Step S102 is as follows: determining, by the sidelink user equipment, a set of candidate slots.

Optionally, the means by which the user equipment determines the set of candidate slots is up to user equipment (UE) implementation.

Optionally, when the resource reservation interval is equal to 0 and the user equipment (at least) performs contiguous partial sensing (CPS), the user equipment selects Y' candidate slots, where $Y' \geq Y_{min}'$, and $Y_{min}'$ represents the configured minimum number of candidate slots corresponding to CPS (or aperiodic transmission) (RRC information element: *minNumCandidaateSlotsAperiodic*). If $Y' < Y_{min}'$, then the user equipment can include other candidate slots up to user equipment implementation (so as to ensure that the number of candidate slots is not less than $Y_{min}'$).

Step S103 is as follows: determining, by the sidelink user equipment, a set of monitoring slots.

Optionally, when the user equipment performs periodic-based partial sensing, the set of monitoring slots of the user equipment is $t_{y-k \times P_{reserve}}^{SL}$, where $t_y^{SL}$ represents (any) one slot in the set of candidate slots excluding the included other candidate slots (corresponding to when $Y' < Y_{min}'$), or $t_y^{SL}$ represents any one of the selected Y' candidate slots. For $P_{reserve}$, when a monitoring period list (*periodicSensingOccasionReservePeriodList*) is configured in the resource pool, $P_{reserve}$ corresponds to a period in the list, optionally, excluding '0 ms', or $P_{reserve}$ corresponds to a non-zero period in the list; otherwise, $P_{reserve}$ corresponds to all periods in a resource reservation period list (*sl-ResourceReservePeriodList*) configured in the resource pool, optionally, excluding '0 ms', or $P_{reserve}$ corresponds to all non-zero periods in *sl-ResourceReservePeriodList*. For *k*, if no additional periodic monitoring slot (*additionalPeriodicSensingOccasion*) is configured (or pre-configured), then $t_{y-k \times P_{reserve}}^{SL}$ represents the most recent periodic monitoring slot (the most recent periodic sensing occasion) before a time $t_{y_0}^{SL} - (T_{proc,0}^{SL} + T_{proc,1}^{SL})$ for a corresponding given $P_{reserve}$; otherwise, $t_{y-k \times P_{reserve}}^{SL}$ represents the most recent periodic monitoring slot (the most recent periodic sensing occasion) before the time $t_{y_0}^{SL} - (T_{proc,0}^{SL} + T_{proc,1}^{SL})$ for a corresponding given $P_{reserve}$, as well as the last periodic monitoring slot prior to the most recent periodic monitoring slot for the given $P_{reserve}$, where $t_{y_0}^{SL}$ represents the first slot in the set of candidate slots in the time domain.

[Embodiment 2]

In Embodiment 2 of the present invention, the steps performed by user equipment include:
Step S101, requesting (or triggering), by a higher layer (or an upper layer), sidelink user equipment (the physical layer) to determine a resource subset for a PSSCH/PSCCH transmission.

The higher layer selects a sidelink resource for the PSSCH/PSCCH transmission from the resource subset.

Optionally, the higher layer provides a resource reservation interval, and optionally, the resource reservation interval is equal to 0 milliseconds, or 0.

Step S102 is as follows: determining, by the sidelink user equipment, a set of candidate slots.

Optionally, the means by which the user equipment determines the set of candidate slots is up to user equipment (UE) implementation.

Optionally, when the resource reservation interval is equal to 0 and the user equipment (at least) performs contiguous partial sensing (CPS), the user equipment selects Y' candidate slots, where $Y' \geq Y_{min}'$, and $Y_{min}'$ represents the configured minimum number of candidate slots corresponding to CPS (or aperiodic transmission) (RRC information element: *minNumCandidaateSlotsAperiodic*). If $Y' < Y_{min}'$, then the user equipment can include other candidate slots up to user equipment implementation (so as to ensure that the number of candidate slots is not less than $Y_{min}'$).

Step S103 is as follows: determining, by the sidelink user equipment, a set of monitoring slots.

Optionally, when the user equipment performs periodic-based partial sensing, the set of monitoring slots of the user equipment is $t_{y-k \times P_{reserve}'}^{\prime SL}$, where $t_y^{\prime SL}$ represents (any) one slot in the set of candidate slots excluding the included other candidate slots (corresponding to when $Y' < Y_{min}'$), or $t_y^{\prime SL}$ represents any one of the selected Y' candidate slots. $P_{reserve}' = \left\lceil \frac{T_{max}'}{10240ms} \times P_{reserve} \right\rceil$, where $T_{max}'$ represents the number of slots belonging to the resource pool within 10240 ms (SFN/DFN 0 to 1023). For $P_{reserve}$, when a monitoring period list (*periodicSensingOcca-*

*sionReservePeriodList*) is configured in the resource pool, $P_{reserve}$ corresponds to a period in the list, optionally, excluding '0 ms', or $P_{reserve}$ corresponds to a non-zero period in the list; otherwise, $P_{reserve}$ corresponds to all periods in a resource reservation period list (*sl-ResourceReservePeriodList*) configured in the resource pool, optionally, excluding '0 ms', or $P_{reserve}$ corresponds to all non-zero periods in *sl-ResourceReservePeriodList.* For *k,* if no additional periodic monitoring slot (*additionalPeriodicSensingOccasion*) is configured (or pre-configured), then $t'^{SL}_{y-k \times P'_{reserve}}$ represents the most recent periodic monitoring slot (the most recent periodic sensing occasion) before a time $t'^{SL}_{y_0} - (T^{SL}_{proc,0} + T^{SL}_{proc,1})$ for a corresponding given $P_{reserve}$; otherwise, $t'^{SL}_{y-k \times P'_{reserve}}$ represents the most recent periodic monitoring slot (the most recent periodic sensing occasion) before the time $t'^{SL}_{y_0} - (T^{SL}_{proc,0} + T^{SL}_{proc,1})$ for a corresponding given $P_{reserve}$, as well as the last periodic monitoring slot prior to the most recent periodic monitoring slot for the given $P_{reserve}$, where $t'^{SL}_{y_0}$ represents the first slot in the set of candidate slots in the time domain.

[Embodiment 3]

FIG. 4 is a schematic diagram showing the basic procedure of a method performed by user equipment according to Embodiment 3 of the present invention.

The method performed by user equipment according to Embodiment 4 of the present invention is described in detail below in conjunction with the basic procedure diagram shown in FIG. 4.

As shown in FIG. 4, in Embodiment 3 of the present invention, the steps performed by the user equipment include: Step S201, requesting (or triggering), by a higher layer (or an upper layer), sidelink user equipment (the physical layer) to determine a resource subset for a PSSCH/PSCCH transmission.

The higher layer selects a sidelink resource for the PSSCH/PSCCH transmission from the resource subset.

Optionally, the resource allocation mode of the user equipment is resource allocation based on partial sensing, and optionally, the higher layer configures or instructs the user equipment to perform partial sensing.

Optionally, the higher layer provides a resource reservation interval.

Step S202 is as follow: determining, by the sidelink user equipment, a set of candidate slots.

Optionally, the means by which the user equipment determines the set of candidate slots is up to user equipment (UE) implementation.

Optionally, if the resource reservation interval is not equal to 0 (milliseconds), and/or, optionally, if the user equipment performs periodic-based partial sensing, then the user equipment selects Y candidate slots within a time interval [n + T1, n + T2], and optionally, $Y \geq Y_{min}$, and $Y_{min}$ represents the configured minimum number of candidate slots corresponding to PBPS (or periodic transmission) (RRC information element: *minNumCandidateSlotsPeriodic*), or,

optionally, if the resource reservation interval is equal to 0 (milliseconds), and optionally, if the user equipment (at least) performs contiguous partial sensing, then the user equipment selects Y' candidate slots in the time interval [n + T1, n + T2], and optionally, $Y' \geq Y_{min}'$, and $Y_{min}'$ represents the configured minimum number of candidate slots corresponding to CPS (or aperiodic transmission) (RRC information element: *minNumCandidaateSlotsAperiodic*). If $Y' < Y_{min}'$, then the user equipment can include other candidate slots up to user equipment implementation (so as to ensure that the number of candidate slots is not less than $Y_{min}'$).

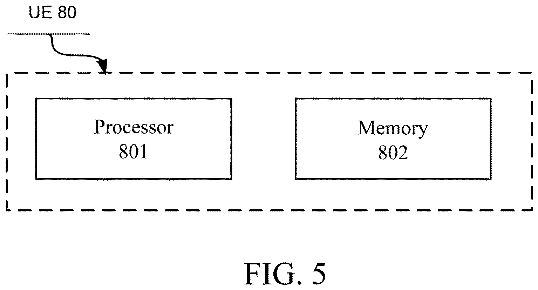

FIG. 5 shows a block diagram of user equipment (UE) according to the present invention. As shown in FIG. 5, user equipment (UE) 80 includes a processor 801 and a memory 802. The processor 801 may, for example, include a microprocessor, a microcontroller, an embedded processor, or the like. The memory 802 may include, for example, a volatile memory (such as a random access memory (RAM)), a hard disk drive (HDD), a non-volatile memory (such as a flash memory), or other memories. The memory 802 has program instructions stored thereon. The instructions, when run by the processor 801, can perform the above method performed by user equipment as described in detail in the present invention.

The method and related equipment according to the present invention are described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment illustrated above may include more modules. For example, the network node and user equipment may further include modules that can be or will be developed in the future to be applied to a base station, an MME, or UE, and the like. The various identifiers shown above are only exemplary, and are not meant for limiting the present invention. The present invention is not limited to the specific information elements serving as examples of these identifiers. A person skilled in the art could make various alterations and modifications according to the teachings of the illustrated embodiments.

It should be understood that the above-described embodiments of the present invention may be implemented by software, hardware, or a combination of software and hardware. For example, various components in the base station and user equipment in the above embodiments can be implemented by multiple devices, and these devices include but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present application, the term "base station" may refer to a mobile communication data and control exchange center having large transmission power and a wide coverage area, including functions such as resource allocation and scheduling and data reception and transmission. "User equipment" may refer to user mobile terminals, such as terminal devices that can communicate with a base station or a micro base station wirelessly, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by circuits, which are usually one or more integrated circuits. Circuits designed to execute various functions described in the present specification may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology that can replace current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by user equipment, comprising:

    requesting or triggering, by a higher layer, the user equipment to determine a resource subset for a PSSCH/PSCCH transmission, wherein the higher layer selects a sidelink resource for the PSSCH/PSCCH transmission from the resource subset; and
    determining, by the user equipment, a set of candidate slots.

2. The method according to claim 1, wherein

    the higher layer provides a resource reservation interval; and/or
    the means by which the user equipment determines the set of candidate slots is up to user equipment implementation.

3. The method according to claim 1 or 2,

further comprising: determining, by the user equipment, a set of monitoring slots.

4. The method according to claim 3, wherein
when the higher layer provides a resource reservation interval, the resource reservation interval is equal to 0.

5. The method according to claim 4, wherein

when the resource reservation interval is equal to 0 and when the user equipment performs contiguous partial sensing (CPS), the user equipment selects Y' candidate slots,
wherein

$$Y' \geq Y_{min}',$$

and
$Y_{min}'$ represents the configured minimum number of candidate slots corresponding to the CPS or aperiodic transmission.

6. The method according to claim 5, wherein
if $Y' < Y_{min}'$, the user equipment can include other candidate slots up to user equipment implementation, so as to ensure that the number of candidate slots is not less than $Y_{min}'$.

7. The method according to claim 6, wherein

when the user equipment performs periodic-based partial sensing (PBPS), the set of monitoring slots of the user equipment is $t_{y-k \times P_{reserve}}^{SL}$ or $t_{y-k \times P'_{reserve}}^{\prime SL}$,
wherein

$t_y^{SL}$ and $t_y^{\prime SL}$ each represent any slot in the set of candidate slots excluding the included other candidate slots, or represent any one of the selected Y' candidate slots,

$P'_{reserve} = \left\lceil \frac{T'_{max}}{10240ms} \times P_{reserve} \right\rceil$, where $T'_{max}$ represents the number of slots belonging to the resource pool within 10240 ms (SFN/DFN 0 to 1023),

for $P_{reserve}$, when a monitoring period list is configured in the resource pool, $P_{reserve}$ corresponds to a period or a non-zero period in the monitoring period list; otherwise, $P_{reserve}$ corresponds to all periods or all non-zero periods in a resource reservation period list configured in the resource pool,

for $k$, if no additional periodic monitoring slot is configured or pre-configured, then $t_{y-k \times P_{reserve}}^{SL}$ represents the most recent periodic monitoring slot before a time $t_{y_0}^{SL} - (T_{proc,0}^{SL} + T_{proc,1}^{SL})$ for a corresponding given $P_{reserve}$; otherwise, $t_{y-k \times P_{reserve}}^{SL}$ represents the most recent periodic monitoring slot before the time $t_{y_0}^{SL} - (T_{proc,0}^{SL} + T_{proc,1}^{SL})$ for a corresponding given $P_{reserve}$, as well as the last periodic monitoring slot prior to the most recent periodic monitoring slot for the given $P_{reserve}$, and $t_{y-k \times P'_{reserve}}^{\prime SL}$ represents the most recent periodic monitoring slot before a time $t_{y_0}^{\prime SL} - (T_{proc,0}^{SL} + T_{proc,1}^{SL})$ for a corresponding given $P_{reserve}$; otherwise, $t_{y-k \times P'_{reserve}}^{\prime SL}$ represents the most recent periodic monitoring slot before the time $t_{y_0}^{\prime SL} - (T_{proc,0}^{SL} + T_{proc,1}^{SL})$ for a corresponding given $P_{reserve}$, as well as the last periodic monitoring slot prior to the most recent periodic monitoring slot for the given $P_{reserve}$, where $t_{y_0}^{SL}$ and $t_{y_0}^{\prime SL}$ each represent the first slot in the set of candidate slots in a time domain, $T_{proc,1}^{SL}$ represents a first processing latency, and

$T_{proc,0}^{SL}$ represents a second processing latency.

8. The method according to claim 1 or 2, wherein

   a resource allocation mode of the user equipment is resource allocation based on partial sensing, and/or
   the higher layer configures or instructs the user equipment to perform partial sensing.

9. The method according to claim 1 or 2, wherein

   if the resource reservation interval is not equal to 0 and/or if the user equipment performs periodic-based partial sensing (PBPS), then the user equipment selects Y candidate slots within a time interval [n + T1, n + T2] used as a resource selection window, wherein $Y \geq Y_{min}$, and $Y_{min}$ represents the configured minimum number of candidate slots corresponding to the PBPS or periodic transmission; or,
   if the resource reservation interval is equal to 0 and/or if the user equipment performs contiguous partial sensing (CPS), then the user equipment selects Y' candidate slots within a time interval [n + T1, n + T2] used as a resource selection window, wherein $Y' \geq Y_{min}'$, and $Y_{min}'$ represents the configured minimum number of candidate slots corresponding to the CPS aperiodic transmission.

10. User equipment, comprising:

    a processor; and
    a memory having instructions stored therein,
    wherein the instructions, when run by the processor, perform the method according to any one of claims 1 to 9.

FIG. 1

FIG. 2

S101

A higher layer requests determination
of a resource subset for
PSSCH/PSCCH transmission

S102

Determine a set of candidate slots

S103

Determine a set of monitoring
slots based on PBPS

FIG. 3

S201

A higher layer requests
determination of a resource subset
for PSSCH/PSCCH transmission

S202

Determine a set of candidate slots

FIG. 4

UE 80

| Processor 801 | Memory 802 |

FIG. 5

## INTERNATIONAL SEARCH REPORT

| International application No. |
|---|
| **PCT/CN2023/088372** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 高层, 请求, 触发, 侧链路, 旁链路, 侧行链路, 资源, 子集, 集合, 时隙, 用户设备, 预留, 间隔, 监听, 感知, 周期, higher, layer, request, trigger, sidelink, resource, subset, group, collection, timeslot, UE, reserve, interval, listen, sense, period

**C. DOCUMENTS CONSIDERED TO BE RELEVANT**

| Category* | Citation of document, with indication, where appropriate, of the relevant passages | Relevant to claim No. |
|---|---|---|
| X | MODERATOR (INTEL CORP.). "Outcome and TP of [101-e-NR-5G_V2X_NRSL-Mode-2-05]" *3GPP TSG RAN WG1 Meeting #101-E R1- 2004942*, 05 June 2020 (2020-06-05), text, pages 5-7 | 1-6, 8, 10 |
| X | CN 113630889 A (SAMSUNG ELECTRONICS CO., LTD.) 09 November 2021 (2021-11-09) description, paragraphs [0040]-[0084] and [0123] | 1-6, 8, 10 |
| X | CN 112312526 A (ASUSTEK COMPUTER INC.) 02 February 2021 (2021-02-02) description, paragraphs [0058]-[0089] | 1-6, 8, 10 |
| A | CN 113543083 A (BEIJING SAMSUNG TELECOM R&D CENTER et al.) 22 October 2021 (2021-10-22) entire document | 1-10 |
| A | CN 114071734 A (SHARP CORP.) 18 February 2022 (2022-02-18) entire document | 1-10 |
| A | US 2021400664 A1 (QUALCOMM INC.) 23 December 2021 (2021-12-23) entire document | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 June 2023** | **03 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/088372**

| Patent document cited in search report | | | Publication date (day/month/year) | Patent family member(s) | | | Publication date (day/month/year) |
|---|---|---|---|---|---|---|---|
| CN | 113630889 | A | 09 November 2021 | TW | 202214028 | A | 01 April 2022 |
| | | | | EP | 3920615 | A1 | 08 December 2021 |
| | | | | KR | 20210135929 | A | 16 November 2021 |
| | | | | US | 2021352677 | A1 | 11 November 2021 |
| CN | 112312526 | A | 02 February 2021 | US | 2022408357 | A1 | 22 December 2022 |
| | | | | EP | 3780891 | A1 | 17 February 2021 |
| | | | | KR | 20210016278 | A | 15 February 2021 |
| | | | | US | 2021037468 | A1 | 04 February 2021 |
| CN | 113543083 | A | 22 October 2021 | WO | 2021215822 | A1 | 28 October 2021 |
| | | | | EP | 4128925 | A1 | 08 February 2023 |
| | | | | KR | 20230005134 | A | 09 January 2023 |
| CN | 114071734 | A | 18 February 2022 | WO | 2022028413 | A1 | 10 February 2022 |
| US | 2021400664 | A1 | 23 December 2021 | WO | 2021262681 | A1 | 30 December 2021 |
| | | | | KR | 20230026326 | A | 24 February 2023 |
| | | | | EP | 4169350 | A1 | 26 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Work item proposal on LTE Device to Device Proximity Services. *RP-140518*
- Work Item Proposal for Enhanced LTE Device to Device Proximity Services. *RP-142311*
- New WI proposal: Support for V2V services based on LTE sidelink. *RP-152293*
- New WID on 3GPP V2X Phase 2. *RP-170798*
- New SID Proposal: Study on NR V2X. *RP-181480*
- WID revision: NR sidelink enhancement. *RP-202846*